Europäisches Patentamt

European Patent Office

Office européen des brevets

(19)

(11) Numéro de publication: **0 161 193**
**A1**

(12) ## DEMANDE DE BREVET EUROPEEN

(21) Numéro de dépôt: **85420061.5**

(22) Date de dépôt: **01.04.85**

(51) Int. Cl.⁴: **F 02 M 37/22**
**F 02 M 31/16, B 01 D 35/18**

(30) Priorité: **04.04.84 FR 8405855**

(43) Date de publication de la demande:
**13.11.85 Bulletin 85/46**

(84) Etats contractants désignés:
**AT BE CH DE FR GB IT LI LU NL SE**

(71) Demandeur: **Schmidt, Jean-Claude**
**5, rue Emile Thomas**
**F-25000 Pontarlier(FR)**

(72) Inventeur: **Schmidt, Jean-Claude**
**5, rue Emile Thomas**
**F-25000 Pontarlier(FR)**

(74) Mandataire: **Maureau, Philippe et al,**
**Cabinet Germain & Maureau Le Britannia - Tour C 20, bld**
**Eugène Déruelle**
**F-69003 Lyon(FR)**

(54) **Dispositif de filtrage et de réchauffage du gazole.**

(57) Ce dispositif est formé de deux cuves (1,2) montées coaxialement l'une dans l'autre et délimitant entre elles un espace annulaire (3). La première cuve (1) contient du liquide de filtrage (4) jusqu'à un niveau prédéterminé et sert à filtrer le gazole, celui-ci s'échappant par un tube capillaire (15) enroulé en spirale dans la cuve (1) et s'étendant au-dessus du niveau du liquide de filtrage (4). L'eau chaude provenant du circuit de refroidissement du moteur circule dans l'espace annulaire (3) entre les deux cuves (1,2) et réchauffe entièrement la cuve (1) servant de filtre à gazole.

Dans une autre forme de réalisation, l'eau chaude circule dans un serpentin plongeant à l'intérieur de la cuve de filtrage (1). Le liquide de filtrage est formé par un liquide de densité supérieure à celle du gazole comme de l'eau ou du glycol.

FIG.1

EP 0 161 193 A1

Croydon Printing Company Ltd.

1

## DISPOSITIF DE FILTRAGE ET DE RECHAUFFAGE DU GAZOLE

La présente invention a pour objet un dispositif de filtrage et de réchauffage du gazole dans les véhicules automobiles utilisant ce carburant.

En effet, le gazole contient de la paraffine qui se cristallise dès que la température avoisine - 4°C. Les cristaux ainsi formés ont pour effet de colmater le filtre du décanteur, interrompant de la sorte l'alimentation en gazole du moteur et par conséquent son démarrage.

Diverses solutions permettent de remédier à cet inconvénient. Une première méthode consiste à ajouter, préventivement, à chaque plein de gazole de l'essence ordinaire (dans une proportion de 15 à 30 %) ou des additifs spéciaux, l'efficacité n'est pas toujours totale et ce procédé s'avère de plus onéreux.

Une seconde méthode consiste à prévoir un système de réchauffage du gazole avant son arrivée dans le filtre au moyen de résistances électriques.

Le rendement d'une telle méthode n'est pas très bon puisque le gazole se refroidit à nouveau dans le filtre et un dispositif à thermostat est nécessaire pour commander le chauffage des résistances.

Dans encore une autre méthode, montrée par exemple dans les brevets FR-A-2 177159, FR-A-2 179359 et FR-A-1 432 595, le filtre à gazole est directement réchauffé à l'aide d'un échangeur de température alimenté par le circuit de refroidissement du moteur, cet échangeur de température se fixe sur la partie inférieure du filtre et ne réchauffe donc que le fond de celui-ci de sorte que le réchauffage peut être insuffisant lorsque les températures extérieures sont très basses et qu'il est nécessaire de prévoir des résistances chauffantes additionnelles.

Un autre brevet FR-A-563 799 montre également le réchauffage du filtre à gazole uniquement par ses parois latérales, de sorte que ici aussi le réchauffage peut être insuffisant pour de basses températures.

Enfin tous les dispositifs de filtrage connus utilisent des filtres à papier dont le changement est compliqué et qui laissent passer un pourcentage d'impuretés relativement élevé dans le gazole.

Le but de la présente invention est de remédier à ces inconvénients et notamment de prévoir un dispositif de filtrage et de réchauffage du gazole d'une grande fiabilité, tout en étant de conception simple et peu coûteuse.

2

Un autre but de la présente invention est de fournir un dispositif de filtrage aux performances accrues.

A cet effet, le dispositif selon l'invention, qui est du type dans lequel le filtre à gazole est réchauffé directement par l'eau chaude du circuit de refroidissement du moteur, comprend au moins une cuve apte à filtrer le gazole et à être réchauffée dans sa totalité par l'eau chaude provenant du circuit de refroidissement du moteur et le filtrage du gazole est réalisé à l'aide d'un liquide de densité supérieure à celle du gazole contenu à l'intérieur de cette cuve, ce qui permet d'éliminer les filtres en papier traditionnels.

Avantageusement, le liquide de filtrage est formé par de l'eau ou encore par du glycol auquel sont ajoutés un antioxydant et un anti-émulsionnant. Un colorant peut être également ajouté au liquide de filtrage afin de bien le différencier du gazole.

Selon une forme de réalisation préférée de l'invention, le liquide de filtrage est introduit dans la cuve de filtrage jusqu'à un niveau prédéterminé, celle-ci contient un tube d'alimentation en gazole s'étendant jusqu'au-dessous du niveau du liquide de filtrage et des moyens d'évacuation du gazole sont prévus à la partie supérieure de cette cuve.

Le gazole devant être purifié est introduit dans la cuve par le tube plongeant dans le liquide de filtrage et barbote dans celui-ci, et les impuretés qu'il contient restent en suspension dans le liquide ou se dissolvent dans celui-ci tandis que le gazole, plus léger, s'évacue à l'extérieur par la partie supérieure de la cuve, avant de parvenir, purifié, aux injecteurs.

Ainsi le gazole est simultanément réchauffé et filtré avant son arrivée dans les injecteurs, et tout risque de colmatage du dispositif de filtrage de ce gazole est évité.

Avantageusement, la cuve du dispositif de filtrage peut être réchauffée dans sa totalité par l'eau chaude provenant du circuit de refroidissement et circulant dans un espace sensiblement annulaire ménagé entre cette cuve et une autre cuve dans laquelle elle est disposée concentriquement. La cuve peut être également réchauffée par un serpentin ou similaire s'étendant dans celle-ci et dans lequel circule l'eau chaude du circuit de refroidissement.

De toute façon l'invention sera mieux comprise et d'autres caractéristiques seront mises en évidence à l'aide de la description qui suit en référence au dessin schématique annexé illustrant à titre d'exemples non limitatifs plusieurs formes de réalisation de ce dispositif :

- Figure 1 est une vue en coupe longitudinale selon une première forme de réalisation ;

- Figure 2 est une vue similaire à figure 1 d'une autre forme de réalisation.

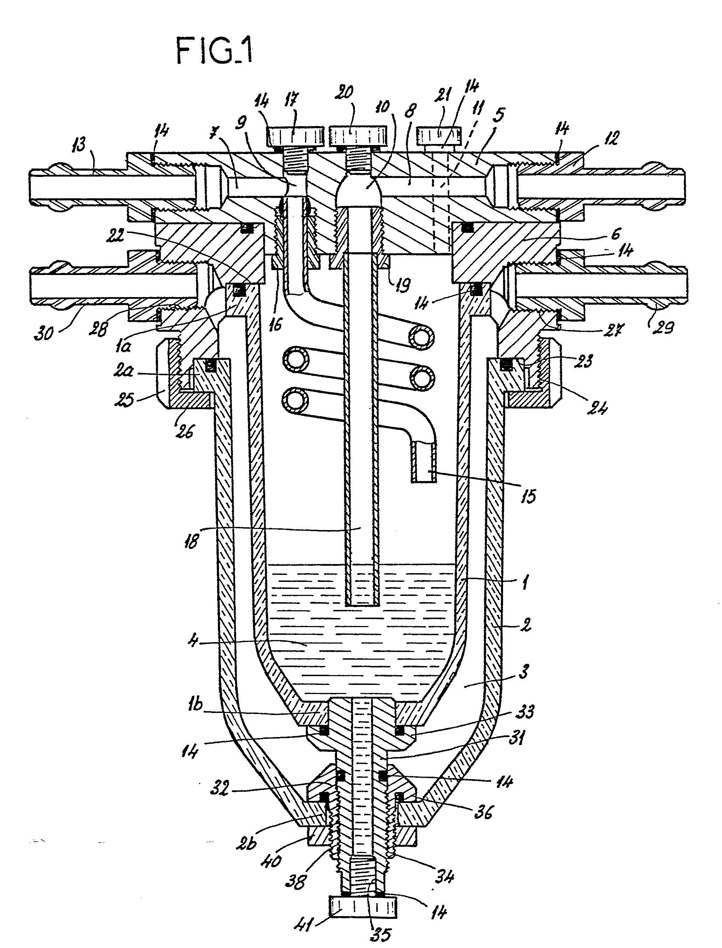

Ainsi que le montre la figure 1, le dispositif de filtrage et de réchauffage selon l'invention comprend deux cuves (1) et (2) essentiellement cylindriques, montées coaxialement l'une dans l'autre, et délimitant entre elles un espace annulaire (3). La cuve (1) est remplie d'un liquide de filtrage, qui est un liquide ayant une densité supérieure à celle de l'eau, environ jusqu'au tiers de sa hauteur. Les deux cuves (1) et (2) sont de préférence en polycarbonate qui est un matériau transparent et très résistant aux chocs ou en polystyrène renforcé qui est également transparent, ce qui permet de visualiser l'état d'encrassement du filtre sans avoir à le démonter.

Un couvercle en deux parties, une partie en forme de disque (5) et une partie en forme de manchon cylindrique (6) ferme l'extrémité supérieure de la cuve (1) et de la cuve (2). Dans le disque (5) sont ménagés deux conduits transversaux (7,8), c'est-à-dire deux conduits s'étendant transversalement à l'axe longitudinal de la cuve (1), et trois conduits axiaux (9,10,11), c'est-à-dire trois conduits s'étendant selon l'axe de la cuve (1).

Les deux conduits transversaux (7,8) servent au raccordement sur le couvercle (5), respectivement d'une tubulure (13) et d'une tubulure (12). Chaque tubulure (13,12) est vissée dans le conduit transversal (7,8) associé, avec interposition d'un joint d'étanchéité (14). La tubulure (12) sert à introduire dans la cuve (1) du dispositif de filtrage et de réchauffage le gazole devant être épuré.

La tubulure (13) est raccordée aux injecteurs du moteur (non représenté sur le dessin) et sert à évacuer le gazole purifié du dispositif et à l'amener aux injecteurs. Les troix conduits axiaux (9,10,11) traversent le disque (5) de part en part.

Le conduit (9) s'étend à l'extrémité interne du conduit transversal (7) et assure avec celui-ci la liaison entre la tubulure (13) d'évacuation du gazole et l'intérieur de la cuve (1).

Ce conduit (9) est muni à chacune de ses extrémités supérieure

4

et inférieure d'un filetage. Un tube capillaire (15), enroulé en spirale, est raccordé par une extrémité à l'extrémité inférieure du conduit (9) par l'intermédiaire d'une douille filetée (16) vissée dans le filetage inférieur de ce conduit (9). L'autre extrémité du tube capillaire (15) se trouve à une distance au-dessus du niveau du liquide de filtrage (4) suffisante pour que celle-ci ne puisse pas s'introduire intempestivement dans le tube capillaire (15).

L'extrémité supérieure du conduit (9) est fermée par un bouchon (17) vissé dans le filetage supérieur de celui-ci. Ce bouchon (17) sert à purger le tube capillaire (15) de l'air qu'il contient.

Comme précédemment, différents joints d'étanchéité (14) assurent l'étanchéité entre les différents éléments.

Le conduit axial (10) s'étend à l'extrémité, située radialement vers l'intérieur du conduit transversal (8) et assure avec celui-ci la liaison entre la tubulure d'alimentation en gazole (12) et l'intérieur de la cuve (1).

De même que le conduit (9), ce conduit (10) présente un filetage à chacune de ses extrémités supérieure et inférieure. Un tube cylindrique droit (18) est raccordé par une extrémité à ce conduit (10) par l'intermédiaire d'une douille filetée (19) vissée à l'extrémité inférieure de ce conduit (10).

Ce tube (18) s'étend, sensiblement coaxialement à la cuve (1), à l'intérieur de celle-ci, au-delà de l'extrémité libre du tube capillaire (15), jusque dans le liquide de filtrage (4).

De même que pour le conduit (9), l'extrémité supérieure du conduit (10) est fermée par un bouchon (20) vissé dans le filetage supérieur de ce conduit (10). Ce bouchon (20) sert à purger le tube (18).

Le troisième conduit axial (11) présente à son extrémité supérieure un filetage dans lequel est vissé un bouchon (21) fermant ce circuit (11). Le bouchon (21) sert à assurer la purge de la cuve (1).

La partie en forme de manchon (6) du couvercle de la cuve (1) est assemblée par emmanchement à force avec la partie en forme de disque (5) de ce couvercle avec interposition d'un joint d'étanchéité (14).

Le manchon (6) présente intérieurement un épaulement circulaire (22) destiné à venir en appui sur la partie supérieure de la cuve (1) et un épaulement circulaire (23) pour l'appui de la partie supérieure de la cuve (2). Chacune des deux cuves (1 et 2) présente dans sa partie supérieure un rebord respectivement (1a,2a) augmentant la surface d'appui sur l'épaulement (22,23) respectif du manchon (6).

Le manchon (6) présente sur sa face périphérique externe, dans sa partie inférieure un filetage (24).

Ce filetage (24) coopère avec celui d'une bague (25) pour serrer la cuve (2) contre l'épaulement (23) du manchon (6), par l'intermédiaire d'un rebord circulaire (26) de cette bague agissant sur le rebord supérieur (2a) de cette cuve, et assurer ainsi l'assemblage, facilement démontable, des deux cuves (1) et (2).

La bague (25) peut être rainurée ou moletée afin de faciliter sa prise.

Sur la paroi latérale du manchon (6) sont ménagés deux conduits (27,28). Ces deux conduits (27,28) s'étendent essentiellement perpendiculairement à l'axe des deux cuves (1 et 2) et présentent en outre une partie s'étendant sensiblement parallèlement à l'axe des deux cuves (1 et 2). Chaque conduit (27,28) présente un filetage dans sa partie transversale, c'est-à-dire perpendiculaire à l'axe des cuves, pour le raccordement par vissage d'une tubulure respectivement (29,30).

Ces deux tubulures (29,30) sont raccordées au circuit de refroidissement du moteur (non représenté sur le dessin). La tubulure (29) sert à introduire dans l'espace annulaire (3) l'eau chaude déviée du circuit de refroidissement du moteur et la tubulure (30) sert à évacuer cette eau après passage dans l'espace annulaire (3).

Deux pièces (31,32) maintiennent à distance l'un de l'autre les fonds (1b,2b) des deux cuves (1 et 2).

La pièce (31) a essentiellement la forme d'un tube ouvert aux deux extrémités et muni au niveau de son extrémité supérieure d'une collerette annulaire (33), celle-ci présentant une gorge périphérique pour le logement d'un joint d'étanchéité (14).

Cette pièce (31) présente sur une partie de sa face périphérique externe un filetage (34) et à son extrémité inférieure un filetage interne (35).

La pièce (32) a également la forme d'un tube, plus court que le précédent et muni d'une collerette annulaire (36) à son extrémité supérieure. Le diamètre intérieur de ce tube (32) correspond à celui extérieur du tube (31). Ce tube (32) présente en outre un filetage intér- rieur correspondant à celui extérieur (34) du tube (31) et un filetage extérieur (38) pour le vissage d'un écrou (40).

La pièce (32) est montée par sa partie tubulaire dans un trou associé ménagé dans le fond (2b) de la cuve (2), la face plane de sa collerette (38) venant en appui sur la paroi interne du fond de la cuve (2).

La seconde pièce (31) est vissée par son filetage (34) dans la pièce (32) jusqu'à atteindre une certaine distance des faces planes de leurs collerettes respectives (33,36) correspondant à la distance désirée entre les fonds des deux cuves (1,2).

La cuve (1) est alors positionnée sur la pièce (31), son fond (1b) étant en appui sur la collerette (33) de celui-ci, la partie du tube (31) saillant au-delà de la collerette (33), pénétrant dans un trou associé du fond de la cuve (1).

La pièce tubulaire (31) débouche alors par chacune de ses extrémités, à la fois à l'intérieur de la cuve (1) et à l'extérieur de la cuve (2) et assure la communication de la cuve (1) avec l'extérieur.

Le maintien en position de ces deux pièces (31) et (32) est assuré par vissage de l'écrou (40) sur la pièce (32).

L'extrémité inférieure du tube (31) est fermée par un bouchon (41) vissé dans son filetage (35).

Comme précédemment, divers joints d'étanchéité (14) assurent l'étanchéité entre les différents éléments.

Ce dipositif de filtrage et de réchauffage du gazole fonctionne de la manière suivante.

La cuve (1) étant remplie partiellement de liquide de filtrage, le gazole est injecté dans la cuve (1) à l'aide de la tubulure (12) et du tuyau (18) plongeant dans le liquide. Le gazole ayant une densité inférieure à celle du liquide de filtrage (4), barbote dans celui-ci avant de s'échapper par le tube capillaire (15) et la tubulure (13), les impuretés qu'il contient restant en suspension dans le liquide de filtrage ou se dissolvant dans celui-ci.

Simultanément, l'eau chaude, provenant du circuit de refroidissement du moteur, entre dans l'espace annulaire (3) entourant la cuve (1) par la tubulure (29), réchauffe celle-ci sur toute sa hauteur et par conséquent le gazole.

On obtient ainsi un excellent réchauffage du gazole, celui-ci pouvant être réchauffé jusqu'à environ 35°C.

En outre, le réchauffage du gazole ainsi réalisé, permet une combustion totale de celui-ci, et donc une économie de gazole de l'ordre de 8 à 15 %. Comme le gazole brûle complètement, il n'y a plus de lessivage des pistons et cylindres par le carburant non brûlé, et donc moins d'usure des segments, ce qui permet une économie sur l'appoint d'huile d'environ 50 %.

Le liquide de filtrage (4) peut être formé tout simplement par de l'eau. Il peut également, pour une meilleure efficacité, être formé par du glycol (employé de préférence pur) additionné d'un antioxydant et d'un anti-émulsionnant.

Ce liquide de filtrage s'est, en effet, avéré être particulièrement efficace ; des mesures effectuées avec un liquide de filtrage de ce type ayant la composition suivante :

- 96,5 % de monoéthylèneglycol,

- 3,0 % de benzoate de sodium (antioxyant),

- 0,5 % de nitrite de sodium (antiémulsionnant),

ont montré que, après passage dans le filtre selon l'invention, il ne reste que 10 g d'impuretés par litre de gazole, alors qu'avec les dispositifs de filtrage conventionnels avec filtre en papier, il reste encore 80 g d'impuretés dans chaque litre de gazole filtré.

L'antioxydant contenu dans le liquide de filtrage sert à éviter que la pompe à injection ne rouille si du liquide de filtrage était aspiré par inadvertance par celle-ci (par exemple, par suite d'une inversion lors du raccordement des tubulures (12,13)).

L'antiémulsionnant sert à éviter que le gazole ne se mélange au liquide de filtrage (4) lorsqu'il arrive, sous une certaine pression, dans celui-ci.

Un colorant et notamment un colorant phosphorescent peut être également ajouté au liquide de filtrage (4) de façon à bien le différencier du gazole et à permettre, même de nuit, une vérification rapide de l'état d'encrassement du filtre (puisque les cuves sont transparentes) ou de vérifier le niveau du liquide de filtrage dans la cuve.

Dans le cas de l'exemple de composition de liquide de filtrage cité précédemment, une coloration phosphorescente particulièrement visible la nuit a été obtenue par l'adjonction des colorants suivants :

- 10 g de colorant orange soluble W200 ;

- 10 g de fluorescéine W742,

ces quantités étant indiquées pour 1 120 kg de produit fini.

Il est à noter qu'avec le système selon l'invention, certaines impuretés, comme le soufre, qui n'étaient pas éliminées avec les systèmes de filtrage conventionnels avec filtre en papier, se dissolvent dans l'eau, et en plus forte proportion encore, dans le glycol et sont donc éliminées par le système de filtrage par liquide selon l'invention.

Le dispositif selon l'invention permet, donc, en outre, une diminution notable de la pollution.

Le nettoyage du filtre selon l'invention est très facile à réaliser, en effet, il suffit d'enlever le bouchon (41) pour éliminer le liquide de filtrage chargé d'impuretés contenu dans la cuve (1). Ce bouchon (41) étant remis en place, il suffit d'introduire à nouveau du liquide de filtrage dans la cuve (1) au moyen du tube (18) pour remplir celle-ci jusqu'au niveau désiré et de purger le tube capillaire (15) et la cuve (1) à l'aide des bouchons de purge (17) et (21).

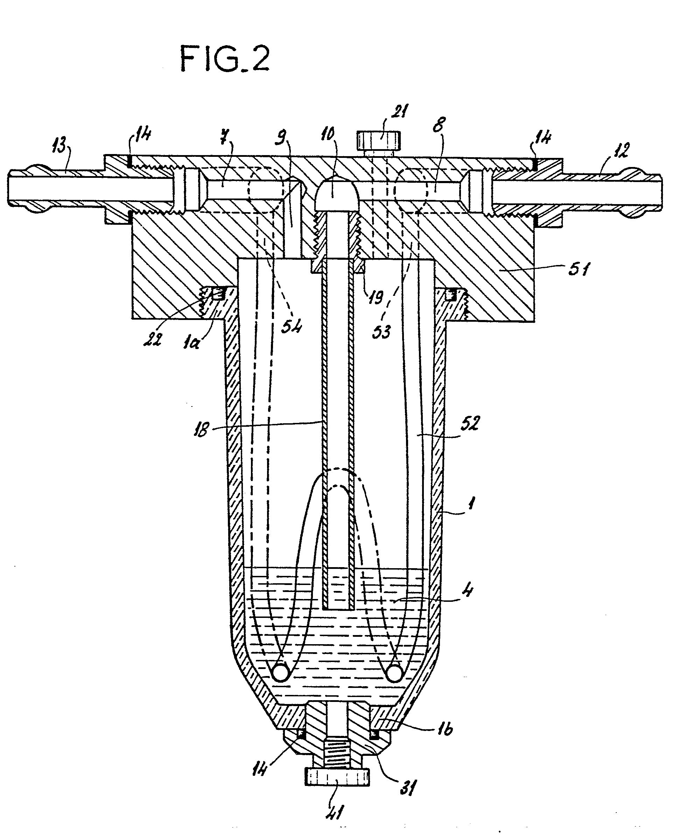

Dans l'exemple de réalisation montré à la figure 2, le dispositif de filtrage et de réchauffage du gazole ne comprend, contrairement à l'exemple de la figure 1, qu'une seule cuve de filtrage (1) sensiblement cylindrique, remplie à peu près jusqu'au tiers de sa hauteur par le liquide de filtrage (4) et fermée par un couvercle en une seule partie (51) vissé sur celle-ci (avec interposition d'un joint d'étanchéité (22)).

De même que dans cet exemple précédent, un tube cylindrique (18), qui est relié par des canaux (8,10) ménagés dans le couvercle (51) de la cuve (1) à une tubulure (12) d'amenée de gazole, plonge à l'intérieur du liquide (4) et un bouchon de purge (21) est prévu dans le couvercle de la cuve (1).

Par contre, le gazole purifié n'est plus évacué par un capillaire (15) (bien que cela soit toujours possible) mais simplement par les conduits (7) et (9) ménagés dans le couvercle (51) et les bouchons de purge (17) et (20) sont supprimés.

Un serpentin (52) s'étend à l'intérieur de la cuve (1) jusqu'à proximité de son fond (1b). Les extrémités de ce serpentin sont reliées, par l'intermédiaire de conduits (53,54) ménagés dans le couvercle (51) et de tubulures de raccordement associées, au circuit de refroidissement du moteur.

Ainsi l'eau chaude, provenant du circuit de refroidissement du moteur circule directement à l'intérieur de la cuve, par le serpentin (52), et réchauffe complètement l'intérieur de celle-ci.

Cette seconde forme de réalisation du dispositif selon l'invention est particulièrement avantageuse parce qu'elle permet de simplifier énormément le dispositif et d'en réduire notablement l'encombrement tout en étant aussi efficace.

Bien entendu, la présente invention ne se limite pas aux seules formes d'exécution décrites ci-dessus à titre d'exemples non limitatifs, mais en embrasse au contraire toutes les formes de réalisation mettant en oeuvre des moyens similaires ou équivalents, c'est ainsi que, par exemple, des liquides de filtrage autres que de l'eau ou du glycol pourraient être utilisés sans que l'on sorte pour autant du cadre de la présente invention.

## 10

## - <u>REVENDICATIONS</u> -

1- Dispositif de filtrage et de réchauffage du gazole, du type dans lequel le filtre à gazole est réchauffé directement par l'eau chaude du circuit de refroidissement du moteur, caractérisé en ce qu'il comprend au moins une cuve (1) apte à filtrer le gazole et à être réchauffée dans sa totalité par l'eau chaude provenant du circuit de refroidissement du moteur et en ce que le filtrage du gazole est réalisé à l'aide d'un liquide (4) de densité supérieure à celle du gazole contenu à l'intérieur de cette cuve (1).

2- Dispositif selon la revendication 1, caractérisé en ce que le liquide de filtrage est de l'eau.

3- Dispositif selon la revendication 1, caractérisé en ce que le liquide de filtrage est formé par du glycol.

4- Dispositif selon la revendication 3, caractérisé en ce que le liquide de filtrage contient un antioxydant et un anti-émulsionnant.

5- Dispositif selon l'une quelconque des revendications précédentes, caractérisé en ce que le liquide de filtrage (4) est introduit dans la cuve de filtrage (1) jusqu'à un niveau prédéterminé, en ce que celle-ci contient un tube (18) d'alimentation en gazole s'étendant jusqu'au-dessous du niveau du liquide de filtrage (4) et en ce que des moyens d'évacuation (7,9,15) du gazole sont prévus à la partie supérieure de cette cuve (1).

6- Dispositif selon l'une quelconque des revendications précédentes, caractérisé en ce qu'il comprend une seconde cuve (2) s'étendant coaxialement tout autour de la première cuve (1) et en ce que l'eau chaude provenant du circuit de refroidissement du moteur circule dans l'espace sensiblement annulaire (3) délimité entre ces deux cuves (1,2).

7- Dispositif selon la revendication 6, caractérisé en ce qu'un couvercle en deux parties (5,6) ferme l'extrémité des deux cuves (1,2) et coopère avec une bague filetée (25) pour l'assemblage des deux cuves (1 et 2) et en ce que dans ce couvercle (5,6) sont ménagés différents conduits (8,10 ; 7,9 ; 27,28) destinés à assurer le raccordement des tubulures d'alimentation et d'évacuation (12,13) du gazole et des tubulures d'alimentation et d'évacuation (29,30) de l'eau provenant du circuit de refroidissement du moteur, respectivement à l'intérieur de la cuve (1) et de l'espace annulaire (3).

8- Dispositif selon l'une des revendications 6 ou 7, caractérisé en ce que deux pièces sensiblement tubulaires (31,32) assurent le maintien à distance l'un de l'autre des fonds (1b,2b) des deux cuves (1,2).

9- Dispositif selon l'une quelconque des revendications 1 à 5, caractérisé en ce que la cuve (1) est réchauffée à l'aide d'un serpentin (52) s'étendant à l'intérieur de celle-ci et dans lequel circule l'eau chaude provenant du circuit de refroidissement.

10- Dispositif selon l'une quelconque des revendications précédentes, caractérisé en ce qu'au moins un bouchon de purge respectivement (21,41) est prévu dans le couvercle respectivement (4,51) et dans le fond (1b) de la cuve (1).

# FIG.1

## FIG.2

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | FR-A-2 164 780 (LACREX BREVETTI) <br> * Page 1, lignes 1-5, 21-27, 37-38; page 2, lignes 7-13, 24-30 * | 1,6 | F 02 M 37/22 <br> F 02 M 31/16 <br> B 01 D 35/18 |
| | --- | | |
| D,A | FR-A-1 432 595 (YANACOPOULO) <br> * Page 1, colonne de gauche, lignes 1-18, 28-40; colonne de droite, lignes 1-11, 20-39; page 2, colonne de gauche, lignes 1-15 * | 1,6,8 | |
| | ----- | | |

| | DOMAINES TECHNIQUES RECHERCHES (Int. Cl.4) |
|---|---|
| | F 02 M <br> B 01 D |

Le présent rapport de recherche a été établi pour toutes les revendications

| Lieu de la recherche | Date d'achèvement de la recherche | Examinateur |
|---|---|---|
| LA HAYE | 24-06-1985 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82